# EUROPÄISCHE PATENTSCHRIFT

(11) **EP 0 551 859 B1**
(45) Veröffentlichungstag und Bekanntmachung des Hinweises auf die Patenterteilung: **23.10.1996**
(21) Anmeldenummer: 93100310.7
(22) Anmeldetag: 12.01.1993
(51) Int. Cl.: C05F 3/00, C05G 1/00, C05F 1/00

(54) **Verfahren zum Verfestigen von Panseninhalt**
Process for solidifying waste rumen contents
Procédé pour solidifier les contenus des panses des ruminants

(30) Priorität: 14.01.1992 DE 4200704; 01.02.1992 DE 4202942
(43) Veröffentlichungstag der Anmeldung: 21.07.1993
(73) Patentinhaber: Fritsch, Georg, Dr., D-44563 Castrop-Rauxel (DE)
(72) Erfinder: Fritsch, Georg, Dr., D-44563 Castrop-Rauxel (DE)
(74) Vertreter: Thiel, Christian, Dr. Dipl.-Chem.

(56) Entgegenhaltungen:
- DE-A- 923 791
- DATABASE WPIL Section Ch, Week 8334, Derwent Publications Ltd., London, GB; Class C04, AN 83-745809
- DATABASE WPIL Section Ch, Week 8633, Derwent Publications Ltd., London, GB; Class A09, AN 86-216212 & JP-A-61148288

## Beschreibung

Die Erfindung betrifft ein Verfahren zum Verfestigen von Panseninhalt von Schlachtrindern, ggf. in Abmischung mit anderen Schlachtabgängen, insbesondere Blut.

Im Jahre 1979 wurden in der Bundesrepublik Deutschland 4,76 Mio. Rinder geschlachtet. Diese Zahl dürfte in der Zwischenzeit noch zugenommen haben. Daraus ergaben sich etwa 238.000 t Panseninhalt, also etwa 50 kg pro Rind (Fleischwirtschaft, Band 61, S. 1689 (1981)). Da diese Schlachtabgänge bislang keiner gezielten Verwendung zugeführt werden konnten, stellt die Entsorgung ein ökonomisches wie ökologisches Problem dar.

Des weiteren fallen in Schlachthöfen größere Mengen Tierblut an, die nur zum Teil einer weiteren Verwendung zugeführt werden können. Im Rahmen des Trends zu "gesunder" und "leichter" Nahrung ist zu erwarten, daß die Verwendung von Tierblut trotz dessen nicht unwesentlichen Eisengehalts als Nahrungsmittel in der Nahrungsmittelherstellung weiter zurückgehen wird.

Das sich aus der Entsorgung dieser Schlachtabgänge ergebende Problem ist eine Folge des mit der Industrialisierung gestiegenen Fleischbedarfs und der dadurch notwendig gewordenen industriellen Fleischerzeugung. Die früher praktizierte Beseitigung des beim Schlachten anfallenden Mageninhalts der Schlachttiere durch Kompostierung oder Ausbringung auf landwirtschaftlich genutzte Flächen ist wegen der großen anfallenden Mengen und der dabei auftretenden Geruchsbelästigung nicht mehr im ausreichenden Umfang möglich.

Versuche, den in Schlachthöfen anfallenden Panseninhalt so aufzubereiten, daß er als Bodenverbesserer in der Landwirtschaft eingesetzt werden kann, blieben erfolglos. Dies lag an zwei Problemen, die nicht gelöst werden konnten. Zum einen konnte die mit der Ausbringung verbundene intensive Geruchsentwicklung nicht unterbunden werden, zum anderen ergaben sich Probleme bei der Lagerung in den Jahreszeiten, in denen eine Düngung von Feldern nicht möglich war. Insoweit war man gezwungen, bei der Beseitigung dieser Schlachtabgänge übliche Beseitigungsmethoden, etwa die Deponierung, anzuwenden, was angesichts der zunehmenden Verknappung des zur Verfügung stehenden Deponieraums mit ständig steigenden Kosten verbunden ist.

Es sind ferner Verfahren bekannt, Tierblut durch Trocknung in eine feste Form zu bringen, die zum Einsatz als Düngemittel geeignet ist. Es ergeben sich hierbei aber Schwierigkeiten bezüglich der Verfestigung und der Handhabbarkeit des so erzeugten Mehls.

In erster Linie wird die Entsorgung von Abgängen organischer Natur gedanklich fast ausnahmslos mit der Verbrennung assoziiert. Es scheint auf der Hand zu liegen, angesichts des knappen Deponieraums die durch die Verbrennung erzielbare erhebliche Volumenverminderung als entscheidendes Argument hervorzuheben. Nachteilig fallen allerdings die hohen Kosten ins Gewicht, die sich aus den Annahmegebühren, den Transportkosten und die stark negative Energiebilanz ergeben, die sich aus dem hohen Wassergehalt der zu beseitigenden Schlachtabgänge ergibt. Abgesehen davon mangelt es auch an verfügbarer installierter Verbrennungskapazität. Aus diesen Gründen wären andere Entsorgungsmöglichkeiten wünschenswert.

Als weiterer, umweltpolisch wichtiger Aspekt ist die Vermeidung der Belastung der Vorflut durch sauerstoffzehrende Stoffe hervorzuheben. Das Abschwemmen von Panseninhalt, sowie das Einleiten von Blut in die Kanalisation und damit in die Vorflut, wurde bereits durch die Einführung des Abwasserabgaben-Gesetzes bekämpft. Umweltpolitisch wie volkswirtschaftlich geboten ist aber grundsätzlich die Vermeidung von Abfällen. Diesem Gebot wird diese Erfindung in vollem Umfang gerecht. Ökonomisch-theoretisch betrachtet wird sogar insoweit die Gebühr für die Abwasserabgabe vermieden, praktisch zumindest aber sehr stark reduziert. Die Erfindung dient damit auch dem Schutz des lebenswichtigen Umweltmediums Wasser.

Von Bedeutung für die Entsorgung dieser Schlachtabgänge ist die Zusammensetzung des beim Schlachten anfallenden Mageninhalts. Bei Rindern, deren Verdauungssystem aus insgesamt vier Mägen besteht, wird dieser hier pauschal als Panseninhalt bezeichnet, obwohl er auch den Inhalt der drei anderen Mägen umfaßt; die Bezeichnung Panseninhalt, wie sie auch im folgenden verwandt wird, ist aber insoweit zutreffend, als der Panseninhalt den bei weitem größten Anteil stellt. Der Pansen eines Rindes enthält ausschließlich anverdautes Grün- und Rauhfutter, das damit, neben den mehr oder weniger verdauten Inhaltsstoffen der anderen Mägen, als Hauptbestandteil auftritt. Da das den Rindern verabreichte Grün- und Rauhfutter in aller Regel nicht mit produktionsspezifischen Schadstoffen belastet ist, ist die Bezeichnung "Abfall" im klassischen Sinne hier weniger angebracht. Vielmehr stellen diese Schlachtabgänge in mancher Hinsicht durchaus noch nutzbare Wertstoffe dar, deren Nutzung lediglich durch die Form ihres Anfalls erschwert wird.

In der Praxis besteht der Panseninhalt eines Rindes aus ca. 12 bis 20 % Trockenmasse und ca. 80 bis 88 % flüchtigen Stoffen, im wesentlichen Wasser. Die Trockenmasse kann insoweit variieren, als es in einem Teil der Schlachthöfe üblich ist, zur Volumenverminderung einen Teil der enthaltenen Flüssigkeit abzupressen. Betrachtet man die Trockenmasse, so handelt es sich fast ausschließlich um strukturiertes Material in Gestalt von Halmen, Pflanzenteilen, insbesondere Fasern, sowie gegebenenfalls Kraftfutterresten. Chemisch gesehen sind dies überwiegend Zellulose und ihnen verwandte Verbindungen. Zellulosehaltige Pflanzenmaterialien werden aber herkömmlicherweise im Gartenbau und in der Landwirtschaft zur Bodenverbesserung und -auf-lockerung eingesetzt.

Blut hat einen Wasseranteil von etwa 80 Gew.-% und darüberhinaus einen hohen Mineral- und Proteingehalt. Panseninhalt und Tierblut fallen in Schlachthöfen in der Regel in einem Gewichtsverhältnis von 25 : 16 an.

Weitere Schlachtabgänge, deren Entsorgung zum Problem werden kann oder bereits geworden ist, sind Tierhaare (Borsten), Horn, Hufe bzw. Klauen, Knochen und Zähne.

Aus DE-A-923 791 ist ein Verfahren zur Herstellung von Bodenverbesserungsmitteln bekannt, bei dem der Panseninhalt von Wiederkäuern nach Abpressen von Flüssigkeit mit Grünzeug, Stroh, trockner Erde, Stärke und Düngesalzen vermischt wird und diese Mischung nach Zusatz von Pansenflüssigkeit, Jauche und Fäkalien einer Reifung unterworfen wird. Nach Zusatz von Bakterienkulturen eignet sich die daraus gewonnene Mischung als Bodenverbesserer. Aus SU-A-967 386 ist die Verwendung von feuchtigkeitsreduziertem und sterilisiertem Panseninhalt als Nährboden in der Pilzzucht bekannt.

Der Erfindung liegt die Aufgabe zugrunde, den Panseninhalt von Schlachtrindern so aufzubereiten, daß er einer Nutzung zugeführt werden kann, bei der dessen (strukturelle) Zusammensetzung zum Tragen kommt, also eine Nutzung insbesondere im Gartenbau, in der Land- und Forstwirtschaft.

Eine weitere wichtige Aufgabe ist die Entlastung der Vorflut. Durch Vermeidung der Einbringung von absetzbaren Stoffen und chemischen Sauerstoffbedarf (CSB) auslösenden Stoffen wird ein ökologisch wie ökonomisch bedeutsamer Einsparungseffekt, z.B. an der sogenannten Abwasserabgabe, erreicht.

Dieses Ziel wird mit einem Verfahren der eingangs geschilderten Art erreicht, bei dem 20 bis 99 Gew.-% Pansenhinhalt, ggf. in Abmischung mit anderen Schlachtabgängen, insbesondere Blut, mit 1 bis 80 Gew.-% mineralischem Zuschlag in Form von alkalisch reagierenden Stoffen und/oder hydraulischen Bindemitteln versetzt und intensiv gemischt werden und das Mischgut anschließend unter Verfestigung getrocknet wird.

Erfindungsgemäß wird erreicht, daß die Schlachtabgänge in ein geruchsneutrales Trockenmaterial umgewandelt werden, das zur Bodenverbesserung und -auflockerung eingesetzt werden kann. Das Trockenmaterial ist zugleich geeignet, den pH-Wert der durch Umwelteinflüsse regelmäßig übersäuerten Böden zum neutralen Bereich hin zu stabilisieren, wobei sich vorteilhaft auswirkt, daß die alkalisch reagierenden mineralischen Zuschläge ihre Alkalinität, bedingt durch die Einbindung in das pflanzliche Substrat, nur langsam freisetzen und damit eine lokale Verätzung der Böden vermieden und Langzeitwirkung erzielt wird. Aus diesem Grunde ist das nach dem Verfahren erzielte Trockenmaterial insbesondere für die Forstwirtschaft einsetzbar.

Vorzugsweise werden die Schlachtabgänge, d. h. der Panseninhalt mit den ggf. zugemischten weiteren Schlachtabgängen, einer Vortrocknung bis zu einem Wassergehalt von 40 bis 70 Gew.-% unterworfen. Die Vortrocknung kann beispielsweise in einem mit Warmluft beaufschlagten oder mit einer Heizung versehenen Mischer stattfinden, in den auch anschließend die Zuschlagsstoffe gegeben werden. Eine Abpressung von Feuchtigkeit ist wegen der auftretenden Belastung des abgepreßten Wassers nicht immer ratsam.

Im erfindungsgemäßen Verfahren wird vorzugsweise bis zur Gewichtskonstanz des Mischguts getrocknet, ggf. nach vorheriger Formung und Verpressung des Mischguts. Zweckmäßigerweise wird das Mischgut in einer dünnen Schicht ausgebreitet und mit Wärme beaufschlagt. Die dabei anfallende Trockenmasse wird, sofern sie nicht von vornherein aufgrund ihrer Zusammensetzung und Erzeugungsweise als Granulat anfällt, zu einem Granulat aufgebrochen.

Als alkalisch reagierende mineralische Zuschläge kommen insbesondere Flugasche, nicht mehr bindender Abfallgips, Kalksteinmehl, Dolomitmehl und/oder Mischoxide aus industriellen Verfahren in Frage. Besonders bevorzugt sind Flugasche, Abfallgips und Mischoxide. Soweit diese Zuschläge aus industriellen Verfahren stammen, ist natürlich darauf zu achten, daß keine unzulässigen Mengen an toxischen Materialien in das Verfahren gelangen.

Besonders bevorzugt als Mischoxid sind die bei der Aluminiumherstellung anfallenden Rotschlämme, die einen relativ hohen Eisenanteil zusammen mit Al₂O₃, TiO₂, SiO₂, Na₂O und CaO enthalten. Diese Mischoxide reagieren nicht nur alkalisch, sondern erlauben es, dem Boden Eisen, das als Spurenelement benötigt wird, in kontrollierter und aufnahmefähiger Form zuzusetzen. Der in der Aluminiumindustrie anfallende Rotschlamm gilt selbst als Problemstoff, dessen weitere Verwertung nach wie vor Gegenstand von Untersuchungen ist. Die Verwendung von Rotschlamm ist insbesondere dann angezeigt, wenn der unbehandelnde Schlachtabgang nur wenig oder kein Blut enthält.

Als hydraulische Bindemittel werden in das Verfahren Kalk, Kalkhydrat, Gips in bindefähiger Form und/oder Zement verwandt. Kalk und Zement sind bevorzugt, wobei die Zementsorte keinen besonderen Einschränkungen unterliegt.

Die hier getroffene Unterscheidung zwischen alkalischen Stoffen und hydraulischen Bindemitteln ist insoweit willkürlich, als auch hydraulische Bindemittel alkalisch reagieren können und alkalische Zuschläge Bindemittelqualitäten aufweisen. Insoweit sind diese Begriffe wie Stoffe austauschbar.

Das erfindungsgemäße Verfahren gestattet es, die Schlachtabgänge in nahezu beliebige Mischungen zu überführen, die den jeweiligen Zwecken angepaßt werden können. Panseninhalt selbst kann wegen der sich aus den rückständigen Magensäften und deren Eiweißgehalt ergebenden Klebewirkung zu einer relativ druckfesten Masse verfestigt werden. Durch Zusatz von beispielsweise bereits 1 Gew.-% Mischoxide wird dessen Druckfestigkeit bereits deutlich erhöht. Durch geringe Mengen, etwa bereits 4 Gew.-% eines hydraulischen Bindemittels, wird bereits ein druckfestes Produkt erhalten, das ohne weiteres granuliert. Andererseits können auch Mischungen hergestellt werden, die bei einem Gehalt an Panseninhalt von nur 20 % große Mengen an alkalischen Zuschlägen aufnehmen können, ohne daß die mit dem erfindungsgemäßen Verfahren erreichten Vorteile verlorengehen. Auf diese Art und Weise ist es möglich, spezielle Mischungen vorzugeben, die zu einem Produkt mit entweder überwiegend auflockernder, überwiegend neutralisierender oder überwiegend düngender Wirkung führt.

Bevorzugt ist eine Mischung aus 20 bis 95 Gew.-% Panseninhalt, 1 bis 50 Gew.-% alkalisch reagierendem Zuschlag und 5 bis 50 Gew.-% hydraulischem Bindemittel.

Zweckmäßige Mischungsverhältnisse im erfindungsgemäßen Verfahren sind beispielsweise solche mit 80 bis 95 Gew.-% Panseninhalt, 1 bis 5 Gew.-% Rotschlamm und 4 bis 19 Gew.-% hydraulischem Bindemittel, insbesondere Kalk, Gips und/oder Zement. Eine andere bevorzugte Mischung besteht aus 20 bis 45 Gew.-% Panseninhalt, 50 bis 75 Gew.-% Zuschlagstoff, insbesondere Rotschlamm, Dolomit, Flugasche und 5 bis 15 Gew.-% hydraulischem Bindemittel.

Zur Verfestigung von Tierblut kann dieses mit bis zu 80 Gew.-% eines mineralischen Zuschlags versetzt werden. Flugasche ergibt mit Tierblut beispielsweise ein festes Produkt in einem Verhältnis von 80 : 20, nach Gewicht, das praktisch keine Trocknung mehr benötigt.

Besonders bevorzugt ist der gemeinsame Einsatz von Panseninhalt und Tierblut, beispielsweise in einem Mengenverhältnis von 3 : 1 bis 1 : 3 und insbesondere von 25 : 16, nach Gewicht. Der hohe Proteingehalt des Tierbluts führt dabei zu einer Bindewirkung, die es erlaubt, auf den Zusatz von hydraulischen Bindemitteln zu verzichten. Ein mineralischer Zuschlag von wenigstens 4 Gew.-% ist aber aus Festigkeitsgründen vorteilhaft.

Zweckmäßig ist beispielsweise eine Mischung aus 20 bis 60 Gew.-% Panseninhalt und Blut mit 20 bis 80 Gew.-% Flugasche, 0 bis 10 Gew.-% Gips (beispielsweise als Hemihydrat) und 0 bis 20 Gew.-% Kalkhydrat. Bei geringem Blutgehalt können zur Erhöhung des Eisengehalts bis zu 5 Gew.-% Hydroxidschlamm (Rotschlamm) zugegen sein.

Dem erfindunsgemäßen Verfahren können weitere Schlachtabgänge zugesetzt werden, beispielsweise Tierhaare, Hornmehl oder -späne oder Zahn/Knochenmehl. Granulierte Zusätze sind ebenfalls möglich.

Gegenstand der Erfindung ist ferner ein Granulat, das mit dem erfindungsgemäßen Verfahren oder einer bevorzugten oder zweckmäßigen Ausführungsform davon herstellbar ist. Solche Granulate können erfindungsgemäß zur Bodenverbesserung und -auflockerung im Garten- und Landbau sowie in der Forstwirtschaft verwandt werden.

Nachstehend wird das erfindungsgemäße Verfahren näher beschrieben.

Durch intensives Vermischen des Schlachtabgangs mit alkalisch reagierenden Zuschlägen, beispielsweise Flugaschen aus mit Steinkohle oder Braunkohle befeuerten Kraftwerken, Abfallgips, Rotschlamm und einem oder mehreren hydraulischen Bindemitteln, beispielsweise Gips-Halbhydrat, Kalk, Kalkhydrat oder Zement, wird ein relativ trockenes, krümeliges und zugleich plastisches Mischgut erhalten. Die Mischapparatur sollte sowohl einen knetenden wie auch gleichzeitig einen verteilenden und verwirbelnden Effekt ergeben.

Nach einer ausreichenden Mischzeit von beispielsweise 5 bis 7 Minuten wird das Mischgut ausgetragen und in möglichst dünner Schicht auf einer Fläche ausgebreitet, die vorzugsweise beheizt ist, beispielsweise mit Abfallwärme. Es ist zweckmäßig, bis zu 98 Gew.% des im Produkt nicht gebundenen Wassers zu verdunsten, was auch durch einen ein- oder mehrmaligen Wendeprozeß gefördert wird. Die Strahlungswärme jedweder geeigneten Quelle, beispielsweise auch in Form von Sonnenwärme, kann zweckmäßig eingesetzt werden.

Das trockene Mischgut wird anschließend zerkleinert, klassiert und in Säcke oder Bigbags abgefüllt und in dieser Form verfrachtet. Je nach Korngrößenverteilung kommen verschiedene Einsatzmöglichkeiten in Betracht.

Das klassierte Fertigprodukt ist ein Wirtschaftsgut, welches je nach Art der Zuschläge entweder mehr zum Zweck der Bodenneutralisation eingesetzt werden kann oder, wenn der Düngeeffekt im Vordergrund steht, auf gärtnerisch oder landwirtschaftlich genutzten Flächen zum Einsatz kommt. Im letzteren Fall kann auch der Bodenauflockerungseffekt allein ausschlaggebend sein, in welchem Fall ein nur geringer Gehalt an Zuschlagstoffen benötigt wird. Besonders vorteilhaft ist bei dem erfindungsgemäß erhaltenen Granulat, daß es im Vergleich zur Ausbringung von reinem Kalkhydrat seine Alkalinität nicht plötzlich abgibt, sondern über einen langen Zeitraum, was zum einen eine lokale Verätzung des Bodens vermeidet und zum anderen eine lang anhaltende Wirkung gegenüber atmosphärischem Säureeintrag gewährleistet. Durch die Korngröße des Granulats, wie auch durch Auswahl der Zuschläge kann die Alkali-Abgabecharakteristik in gewünschter Weise gesteuert werden, etwa eine hohe Abgabekapazität durch Vergrößerung der relativen Oberfläche und Auswahl relativ schnell verfügbarer alkalischer Mineralbestandteile.

Weitere Vorteile des erfindungsgemäßen Verfahrens und des dabei erhaltenen Produkts liegen in Entsprechung der gesetzlichen Forderung nach ökonomischer und ökologisch sinnvoller Wiederverwertung von Abfallstoffen. Vorteilhaft ist ferner, daß das erfindungsgemäße Granulat kein Nitrat als Stickstoffquelle enthält. Nitrat ist sowohl durch den Stickstoffeintrag aus der Atmosphäre, wie auch durch den hohen Nitratgehalt der in der Landwirtschaft ausgebrachten Gülle in landwirtschaftlich genutzten Flächen bereits so stark in den Böden angereichert, daß es zu einer Gefährdung des oberflächennahen Grundwassers gekommen ist. Inzwischen ist die Einhaltung der Nitrat-Grenzwerte im Trinkwasser ein kostenträchtiges Problem geworden. Das erfindungsgemäße Granulat enthält dagegen Stickstoff in Form von Ammoniumverbindungen, die unter geeigneten Bedingungen sogar geeignet sind, den Nitratgehalt des Bodens reaktiv zu vermindern.

Überraschenderweise hat sich gezeigt, daß der im Blut oder Panseninhalt enthaltene Aminstickstoff durch den Zuschlag basischer Stoffe nicht freigesetzt wird, sondern darin - wohl gebunden an die organische Materie - im wesentlichen erhalten bleibt. Aus diesem Grunde erweist sich das erfindungsgemäß hergestellte Granulat nach dem Abbinden und Trocknen als im wesentlichen geruchsfrei.

### Beispiel 1

Aus 24,2 Gew.-% Panseninhalt, 52,9 Gew.-% Flugstaub, 3,7 Gew.-% eisenreichem Oxidgemisch, 9,6 Gew.-% Abfallgips und 9,6 Gew.-% Hochofenzement wurde durch intensives Mischen in einer Mischtrommel über etwa 5 Minuten ein Mischgut hergestellt, das nach der Ausbreitung auf einer Fläche und Trocknung bis zur Gewichtskonstanz einen Körper mit einer Druckfestigkeit von 1,68 N/mm² ergab. Nach der Granulierung und Klassierung wurde ein hochalkalischer Dünger erhalten, der reich an Mikronährstoffen, insbesondere Eisen ist.

### Beispiel 2

Ein Granulat wurde aus 20 Gew.-% Panseninhalt, 20 Gew.-% Blut, 36 Gew.-% Flugstaub, 5 Gew.-% Gips, 4 Gew.-% Hydroxidschlamm und 15 Gew.-% Kalkhydrat entsprechend Beispiel 1 hergestellt.

### Beispiel 3

Ein formbeständiges Produkt wurde durch Mischen von 99.Gew.-% Panseninhalt mit 1 Gew.-% Oxidgemisch, Einstampfen in eine Spezialform, Vortrocknung und anschließende Trocknung unter Wärmezufuhr bis zur Gewichtskonstanz hergestellt. Nach 12 Tagen wurde eine Druckfestigkeit von 0,32 N/mm² festgestellt, sowie ein pH-Wert von 10,3 (Eluat 1 : 10 in destilliertem Wasser). Panseninhalt selbst hat einen pH-Wert von 8,4 bis 10,0 (Eluat in destilliertem Wasser) und eine Druckfestigkeit ohne Zuschläge in gepreßtem Zustand von 0,27 N/mm². Durch Zusatz von Tierblut werden die Festigkeitswerte deutlich erhöht.

Bei diesem mit geringem Zuschlag hergestellten Produkt steht der Bodenlockerungseffekt im Vordergrund. Mit dem eisenreichen Oxidgemisch wird zugleich eine gewisse Menge an Mikronährstoff eingebracht, der der Bodenverbesserung dient. Im allgemeinen steht der Bodenlockerungseffekt, gegebenenfalls in Verbindung mit der Bodenneutralisation, bei hohen bis sehr hohen Anteilen an Panseninhalt (≧ 50 Gew.-%) im Vordergrund.

Bei der Trocknung des in krümelig-feuchtem Zustand aus dem Mischer ausgetragenen Mischguts kann, in Abhängigkeit von der Zusammensetzung, sowohl ein Schwindungs- wie auch ein Quellungseffekt beobachtet werden. Dieses Verhalten beruht auf dem Zusammenwirken von Panseninhalt und Kalk. Mit zunehmender Verminderung des Anteils an Panseninhalt in der Rezeptur nähert sich aber das Trocknungs- und Schwindungsverhalten dem der normalen Betontechnologie.

Die Trocknungszeiten sind stark vom Wassergehalt wie Bindemittelgehalt des Produkts, wie auch von der Wärmezufuhr abhängig; sie liegen im allgemeinen zwischen 3 und 14 Tagen bis zur Erzielung der maximalen Druckfestigkeit, die bei einer Menge von 5 Gew.-% hydraulischem Bindemittel bis zu 1,99 N/mm² erreichen kann. Bei der Kombination von Panseninhalt und Blut im Verhältnis von 20 : 15 Gewichtsteilen, bzw. 20 : 13 Gewichtsteilen, bis 62 % Flugasche bzw. Flugasche/Dolomitgemisch und 5 % Zement werden Druckfestigkeiten bis 3,18 N/mm² erreicht.

Eine Kombination von 15,5 % Blut, 79,5 % Flugstaub und 5 % Zement führt nach Erreichen der Gewichtskonstanz (9 Tage) zu einer Druckfestigkeit von 3,82 N/mm².

Eine Granulierung kann in der Regel bereits vor der Erreichung der maximalen Druckfestigkeit vorgenommen werden, was für die Wirtschaftlichkeit des erfindungsgemäßen Verfahrens nicht ohne Bedeutung ist.

Erfindungsgemäß ist es ohne weiteres möglich, das Produkt stark alkalisch, auf Werte im Bereich von pH 9,0 bis 12,9, gemessen an Eluat 1 : 10 in aqua dest., einzustellen, was das Produkt insbesondere zum Einsatz auf übersäuerten Böden geeignet macht.

## Patentansprüche

1. Verfahren zum Verfestigen von Panseninhalt von Schlachtrindern, dadurch gekennzeichnet, daß 20 bis 99 Gew.-% Panseninhalt, ggf. in Abmischung mit anderen Schlachtabgängen, insbesondere Blut, mit 1 bis 80 Gew.-% mineralischem Zuschlag in Form alkalisch reagierender Stoffe und/oder hydraulischer Bindemittel versetzt und intensiv gemischt werden und das Mischgut anschließend unter Verfestigung getrocknet wird.

2. Verfahren nach Anspruch 1, dadurch gekennzeichnet, daß der Panseninhalt einer Vortrocknung bis zu einem Wassergehalt von 40 bis 70 Gew.-% unterworfen wird.

3. Verfahren nach Anspruch 1 oder 2, dadurch gekennzeichnet, daß das Mischgut, ggf. nach Formung und Verpressung, zur Trocknung bis zur Gewichtskonstanz ausgebreitet und mit Wärme beaufschlagt wird.

4. Verfahren nach einem der Ansprüche 1 bis 3, dadurch gekennzeichnet, daß als alkalisch reagierende mineralische Zuschlagstoffe Flugasche, Abfallgips in abgebundener Form, Kalkstein, Dolomit und/oder Mischoxide industrieller Herkunft verwandt werden.

5. Verfahren nach Anspruch 4, dadurch gekennzeichnet, daß als alkalisch reagierender mineralischer Zuschlag Flugasche, Abfallgips, Dolomit und Mischoxide verwandt werden.

6. Verfahren nach Anspruch 4 oder 5, dadurch gekennzeichnet, daß als Mischoxid Rotschlamm verwandt wird.

7. Verfahren nach einem der Ansprüche 1 bis 6, dadurch gekennzeichnet, daß als hydraulisches Bindemittel Kalk, Kalkhydrat, Gips in bindefähiger Form und/oder Zement verwandt werden.

8. Verfahren nach einem der Ansprüche 1 bis 7, dadurch gekennzeichnet, daß 20 bis 95 Gew.-% Panseninhalt mit 1 bis 50 Gew.-% alkalisch reagierendem mineralischen Zuschlag und 4 bis 50 Gew.-% hydraulischem Bindemittel versetzt werden.

9. Verfahren nach einem der Ansprüche 1 bis 8, dadurch gekennzeichnet, daß 80 bis 95 Gew.-% Panseninhalt, 1 bis 5 Gew.-% Rotschlamm und 4 bis 19 Gew.-% hydraulisches Bindemittel in Form von Kalk und/oder Hochofenzement verwandt werden.

10. Verfahren nach einem der Ansprüche 1 bis 8, dadurch gekennzeichnet, daß 20 bis 45 Gew.-% Panseninhalt, 50 bis 75 Gew.-% mineralischer Zuschlag und 5 bis 15 Gew.-% hydraulisches Bindemittel verwandt werden.

11. Verfahren nach einem der Ansprüche 1 bis 7, dadurch gekennzeichnet, daß Panseninhalt und Tierblut gemeinsam verfestigt werden.

12. Verfahren nach Anspruch 11, dadurch gekennzeichnet, daß Panseninhalt und Tierblut in einem Verhältnis von 3 : 1 bis 1 : 3, nach Gewicht, verwandt werden.

13. Verfahren nach Anspruch 12, dadurch gekennzeichnet, daß Panseninhalt und Tierblut in einem Verhältnis von etwa 25 : 16, nach Gewicht, verwandt werden.

14. Verfahren nach einem der Ansprüche 11 bis 13, dadurch gekennzeichnet, daß wenigstens 4 Gew.-% alkalisch reagierender mineralischer Zuschlag zugesetzt werden.

15. Verfahren nach Anspruch 14, dadurch gekennzeichnet, daß 20 bis 60 Gew.-% Panseninhalt und Blut mit 20 bis 80 Gew.-% Flugasche, 0 bis 10 Gew.-% Gips und 0 bis 20 Gew.-% Kalkhydrat verwandt werden.

16. Verfahren nach einem der Ansprüche 1 bis 15, dadurch gekennzeichnet, daß weiterhin Tierhaare, Hornmehl und/oder Knochenmehl zugesetzt werden.

17. Verfahren nach einem der Ansprüche 1 bis 16, dadurch gekennzeichnet, daß der Panseninhalt zu einem Granulat verfestigt wird.

18. Granulat, hergestellt nach Anspruch 17.

19. Verwendung des Granulats nach Anspruch 18 zur Bodenverbesserung und -auflockerung im Garten- und Landbau sowie in der Forstwirtschaft.

## Claims

1. A method of solidifying the contents of the rumen of beef cattle, characterised in that 1 to 80% by weight of mineral additive in the form of alkaline-reaction substances and/or hydraulic binders are added to 20 to 99% by weight of contents of the rumen, optionally mixed with other offal or slaughterhouse waste, particularly blood, and intensively mixed and the mix is subsequently solidified by drying.

2. A method according to claim 1, characterised in that the contents of the rumen are first dried until the water content is 40 to 70% by weight.

3. A method according to claim 1 or 2, characterised in that the mix, optionally after moulding and pressing, is spread out and heat-treated for drying until the weight is constant.

4. A method according to any of claims 1 to 3, characterised in that the alkaline-reaction mineral additives used are fly ash, waste plaster of Paris in set form, limestone, dolomite and/or mixed oxides of industrial origin.

5. A method according to claim 4, characterised in that the alkaline-reaction mineral additive is fly ash, waste plaster of Paris, dolomite and mixed oxides.

6. A method according to claim 4 or 5, characterised in that the mixed oxide used is red mud.

7. A method according to any of claims 1 to 6, characterised in that the hydraulic binders used are lime, slaked lime, plaster of Paris in a form capable of setting and/or cement.

8. A method according to any of claims 1 to 7, characterised in that 1 to 50% by weight of reactive alkaline-reaction mineral additive and 4 to 50% by weight of hydraulic binder are added to 20 to 95% by weight of contents of the rumen.

9. A method according to any of claims 1 to 8, characterised by the use of 80 to 95% by weight of contents of the rumen, 1 to 5% by weight of red mud and 4 to 19% by weight of hydraulic binder in the form of lime and/or blast-furnace cement.

10. A method according to any of claims 1 to 8, characterised by the use of 20 to 45% by weight of contents of the rumen, 50 to 75% by weight of mineral additive and 5 to 15% by weight of hydraulic binder.

11. A method according to any of claims 1 to 7, characterised in that the contents of the rumen and animal blood are solidified together.

12. A method according to claim 11, characterised in that the contents of the rumen and animal blood are used in a proportion of 3 : 1 to 1 : 3 by weight.

13. A method according to claim 12, characterised in that the contents of the rumen and animal blood are used in a proportion of about 25 : 16 by weight.

14. A method according to any of claims 11 to 13, characterised in that at least 4% by weight of alkaline-reaction mineral additive is used.

15. A method according to claim 14, characterised by the use of 20 to 60% by weight of contents of the rumen and blood with 20 to 80% by weight of fly ash, 0 to 10% by weight of plaster of Paris and 0 to 20% by weight of slaked lime.

16. A method according to any of claims 1 to 15, characterised in that animal hair, horn meal and/or bone meal are also added.

17. A method according to any of claims 1 to 16, characterised in that the contents of the rumen are solidified to form a granulate.

18. A granulate prepared according to claim 17.

19. Use of the granulate according to claim 18 for improving and loosening the soil in horticulture, agriculture and forestry.

## Revendications

1. Procédé de solidification du contenu de la panse de bovins à viande, caractérisé en ce qu'on ajoute à 20 à 99 % en masse du contenu des panses, le cas échéant en mélange avec d'autres déchets d'abattage, en particulier du sang, de 1 à 80 % en masse d'additif minéral sous forme de produits à réaction alcaline et/ou de liants hydrauliques et qu'on mélange de façon intense et en ce qu'ensuite on sèche le mélange résultant en le solidifiant.

2. Procédé selon la revendication 1, caractérisé en ce que le contenu des panses est soumis à un séchage préalable jusqu'à une teneur en eau comprise entre 40 et 70 % en masse.

3. Procédé selon la revendication 1 ou 2, caractérisé en ce que le mélange, le cas échéant après formage et compression, est étalé jusqu'à séchage à poids constant et est exposé à la chaleur.

4. Procédé selon l'une des revendications 1 à 3, caractérisé en ce qu'on utilise, en tant qu'additifs minéraux à réaction alcaline, de la suie, du plâtre déchet sous forme prise, du calcaire, de la dolomite et/ou des systèmes d'oxydes mixtes d'origine industrielle.

5. Procédé selon la revendication 4, caractérisé en ce qu'on utilise, en tant qu'additif minéral à réaction alcaline, de la suie, du plâtre déchet, de la dolomite et des systèmes d'oxydes mixtes.

6. Procédé selon la revendication 4 ou 5, caractérisé en ce qu'on utilise, en tant que systèmes d'oxydes mixtes, des boues rouges.

7. Procédé selon l'une des revendications 1 à 6, caractérisé en ce qu'on utilise, en tant que liant hydraulique, de la chaux, de la chaux éteinte, du plâtre sous forme susceptible de prise et/ou du ciment.

8. Procédé selon l'une des revendications 1 à 7, caractérisé en ce qu'on ajoute à 20 à 95 % en masse du contenu des panses de 1 à 50 % en masse d'additif minéral à réaction alcaline et de 4 à 50 % en masse de liant hydraulique.

9. Procédé selon l'une des revendications 1 à 8, caractérisé en ce qu'on utilise de 80 à 95 % en masse de contenu de panses, de 1 à 5 % en masse de boues rouges et de 4 à 19 % en masse de liant hydraulique sous forme de chaux et/ou de ciment de haut fourneau.

10. Procédé selon l'une des revendications 1 à 8, caractérisé en ce qu'on utilise de 20 à 45 % en masse de contenu de panses, de 50 à 75 % en masse d'additif minéral et de 5 à 15 % en masse de liant hydraulique.

11. Procédé selon l'une des revendications 1 à 7, caractérisé en ce que le contenu des panses et le sang animal sont solidifiés ensemble.

12. Procédé selon la revendication 11, caractérisé en ce qu'on utilise le contenu des panses et le sang animal en un rapport de 3:1 à 1:3, en masse.

13. Procédé selon la revendication 12, caractérisé en ce qu'on utilise le contenu des panses et le sang animal en un rapport d'environ 25:16, en masse.

14. Procédé selon l'une des revendications 11 à 13, caractérisé en ce qu'on ajoute au moins 4 % en masse d'additif minéral à réaction alcaline.

15. Procédé selon la revendication 14, caractérisé en ce qu'on utilise de 20 à 60 % en masse de contenu de panses et de sang avec de 20 à 80 % en masse de suie, de 0 à 10 % en masse de plâtre et de 0 à 20 % en masse de chaux éteinte.

16. Procédé selon l'une des revendications 1 à 15, caractérisé en ce qu'on ajoute de plus des poils d'animaux, de la poudre de corne et/ou de la poudre d'os.

17. Procédé selon l'une des revendications 1 à 16, caractérisé en ce que le contenu des panses est solidifié en un granulat.

18. Granulat produit selon la revendication 17.

19. Utilisation du granulat selon la revendication 18 pour l'amélioration et la désagrégation du sol en horticulture et agriculture, ainsi qu'en sylviculture.
